(19) Europäisches Patentamt

European Patent Office

Office européen des brevets

(11) EP 1 530 029 A1

(12) EUROPEAN PATENT APPLICATION

(43) Date of publication:
11.05.2005 Bulletin 2005/19

(51) Int Cl.⁷: **G01F 1/684**, G01F 1/32

(21) Application number: 04256818.8

(22) Date of filing: 04.11.2004

(84) Designated Contracting States:
**AT BE BG CH CY CZ DE DK EE ES FI FR GB GR HU IE IS IT LI LU MC NL PL PT RO SE SI SK TR**
Designated Extension States:
**AL HR LT LV MK YU**

(30) Priority: **07.11.2003 JP 2003378324**

(71) Applicants:
• **Toyota Boshoku Kabushiki Kaisha**
**Kariya-shi, Aichi-ken 448-8651 (JP)**
• **DENSO CORPORATION**
**Kariya-shi, Aichi-ken (JP)**

(72) Inventors:
• **Osuka, Tomohiro**
**Kariya-shi Aichi-ken (JP)**
• **Kamiya, Shinichi**
**Kariya-shi Aichi-ken (JP)**

(74) Representative:
**Dempster, Benjamin John Naftel et al**
**Withers & Rogers,**
**Goldings House,**
**2 Hays Lane**
**London SE1 2HW (GB)**

(54) **Flow duct with flowmeter**

(57)    An induction duct device (10) may include a duct body (20) having a straight tubular portion (22) and a restricting portion (24, 24'), a rectifier member (12) attached to the tubular portion (22) so as to rectify air that is introduced into the duct body (20), and a flow meter (30) attached to the duct body (20) for measuring a flow rate of air that passes through the duct body (20). The restricting portion (24, 24') is coaxially disposed in the tubular portion (22) and has a desired restriction rate (R) relative to the tubular portion (22). The restriction rate (R) of the restricting portion (24, 24') is set to a value that can eliminate deflection of the air. The flow meter (30) is positioned at a desired distance (L) from the rectifier member (12) so as to measure the flow rate of the air in the restricting portion (24, 24') without being affected by swirls produced at a proximity of a downstream end of the rectifier member (12).

FIG. 1 (A)

FIG. 1 (B)

## Description

The present invention relates to induction duct devices used in an induction system of an internal combustion engine.

An induction duct device for an induction system of an internal combustion engine is taught, for example, by Japanese Laid-open Patent Publication Number 2001-99688.

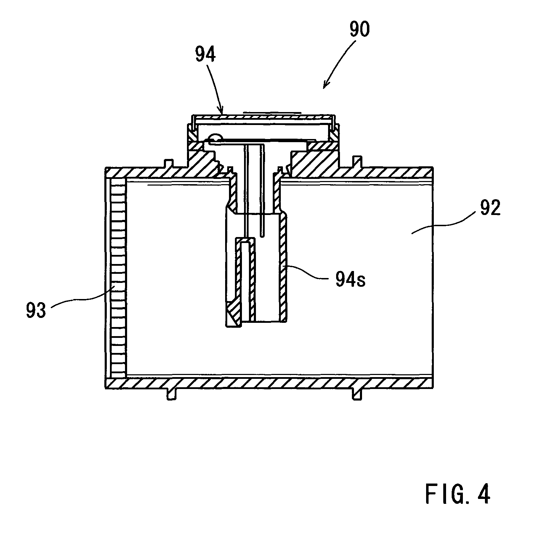

As shown in FIG. 4, the known induction duct device 90 includes a cylindrical duct body 92 and a flow meter 94. The flow meter 94 is disposed in the duct body 92 for measuring a flow rate of air that passes through the duct body 92. A grid-like rectifier member 93 is attached to an upstream end of the duct body 92. The flow meter 94 is a thermal type flow meter that is constructed to measure the air flow rate based upon quantities of heat that are removed from an exothermic body by the air. A detector 94s of the flow meter 94 radially projects into the duct body 92. The detector 94s is arranged so as to measure the flow rate of the air that flows along a radially central portion of the duct body 92.

In the known art induction duct device 90, turbulence of the air that flows from an air cleaner into the duct body 92 can be somewhat eliminated by means of the rectifier member 93 that is attached to the upstream end of the duct body 92. Therefore, velocity of the air passing through the duct body 92 can be stabilized to some extent.

However, the rectifier member 93 may typically produce uniform swirls of air at a proximity of a downstream end thereof. Such swirls of air may decrease accuracy of measurement of the flow meter 94 if the detector 94s of the flow meter 94 is positioned close to the rectifier member 93. In addition, the rectifier member 93 has only slight or low retardation or elimination function with regard to the non-uniformity or deflection of the air. This low elimination function with regard to the deflection of the air may increase errors of measurement of the air flow rate.

It is one object of the present teachings to provide improved induction duct devices for an induction system of an internal combustion engine.

For example, in one aspect of the present teachings, an induction duct device may include a duct body having a straight tubular portion and a restricting portion, a rectifier member attached to the tubular portion so as to rectify air that is introduced into the duct body, and a flow meter attached to the duct body for measuring a flow rate of air that passes through the duct body. The restricting portion is coaxially disposed in the tubular portion and has a desired restriction rate relative to the tubular portion. The restriction rate of the restricting portion is set to a value that can eliminate deflection of the air. The flow meter is positioned at a desired distance from the rectifier member so as to measure the flow rate of the air in the restricting portion without being affected by swirls produced at a proximity of a downstream end of the rectifier member.

According to this induction duct device, the deflection of the air can be effectively eliminated by the restricting portion. Also, the flow meter is not affected by the swirls produced at the proximity of the downstream end of the rectifier member. Therefore, the flow meter may have an increased accuracy of measurement.

Other objects, features and advantages of the present invention will be readily understood after reading the following detailed description together with the accompanying drawings and the claims.

FIG. 1(A) is a vertical, cross-sectional view of an induction duct device according to one representative embodiment of the present teachings; and

FIG. 1(B) is an elevational view of a rectifier member of the induction duct device; and

FIG. 2(A) is a graph of output stability of a flow meter of the induction duct device, in which the induction duct device is coupled to an air cleaner; and

FIG. 2(B) is a graph of errors of measurement of the flow meter of the induction duct device, in which the induction duct device is coupled to an air cleaner; and

FIG. 3(A) is a view similar to FIG. 1(A), which illustrates a first modified form of the induction duct device of the representative embodiment; and

FIG. 3(B) is a view similar to FIG. 1(A), which illustrates a second modified form of the induction duct device of the representative embodiment; and

FIG. 3(C) is a view similar to FIG. 1(A), which illustrates a third modified form of the induction duct device of the representative embodiment; and

FIG. 4 is a vertical, cross-sectional view of a conventional induction duct device.

A representative example of the present invention have been described in detail with reference to the attached drawings. This detailed description is merely intended to teach a person of skill in the art further details for practicing preferred aspects of the present teachings and is not intended to limit the scope of the invention. Only the claims define the scope of the claimed invention. Therefore, combinations of features and steps disclosed in the foregoing detail description may not be necessary to practice the invention in the broadest sense, and are instead taught merely to particularly describe detailed representative examples of the invention. Moreover, the various features taught in this specification may be combined in ways that are not specifically enumerated in order to obtain additional useful embodiments of the present teachings.

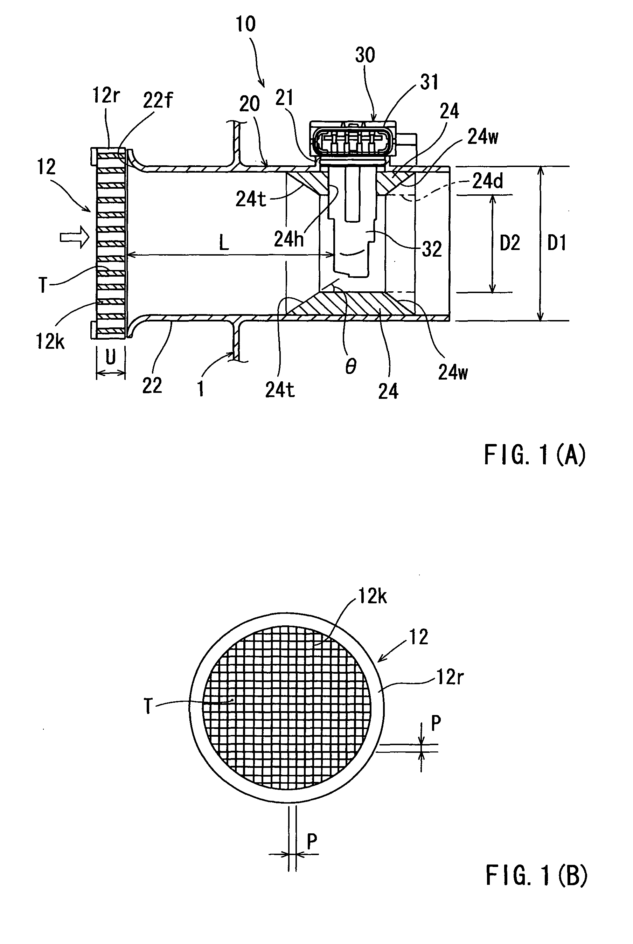

A detailed representative embodiment of the present teachings is shown in FIGS. 1(A) to 3(C).

An induction duct device 10 in the representative embodiment is intended to be used in an induction system of an internal combustion engine (not shown).

The induction duct device 10 may function to receive air that is strained or filtered in an air cleaner (not shown) and to introduce the air into a throttle control device (not shown). The induction duct device 10 may also function to measure the flow rate of the air that is fed to the throttle control device therethrough.

As shown in FIG. 1(A), the induction duct device 10 includes a cylindrical duct body 20 that is made from resinous materials, and a flow meter 30 that is attached to the duct body 20 for measuring a flow rate of air passing through the duct body 20. The duct body 20 is integrally formed with a housing 1 of the air cleaner, thereby forming a one-piece outlet portion of the air cleaner. Therefore, the air is filtered by a filer element (not shown) of the air cleaner before it is introduced into the duct body 20.

The duct body 20 may preferably be constituted of a straight tubular portion 22 and an annular restricting portion 24 disposed in the tubular portion 22. The annular restricting portion 24 may preferably be positioned in the vicinity of a downstream end of the tubular portion 22.

An upstream end of the tubular portion 22 may preferably be circumferentially outwardly flared (e.g., outwardly bent at an angle of 90 degrees), thereby forming an annular flange 22f therein. A rectifier member 12 is attached to the annular flange 22f of the tubular portion 22.

The tubular portion 22 may preferably have a flow meter attachment portion 21 having an opening therein. The flow meter attachment portion 21 may preferably be radially aligned with the annular restricting portion 24.

The rectifier member 12 is intended to rectify the air that is filtered by the filter element of the air cleaner before it is introduced into the duct body 20. As shown in FIG. 1(B), the rectifier member 12 may preferably be constituted of a ring shape frame 12r, and a grid member 12k. The grid member 12k is attached to the frame 12r and has a thickness U. The grid member 12k has a uniform crosswise grid arrangement having a lattice width or lattice pitch P, thereby defining a plurality of air passages T therein. As best shown in FIG. 1(A), the air passages T may extend in parallel with a central axis of the tubular portion 22.

Typically, the length of the air passages T (which directly corresponds to the thickness U of the grid member 12k) may preferably be three times or more than the lattice pitch P of the grid member 12k. Further, similar to the duct body 20, the rectifier member 12 may preferably be made from resinous materials. However, the rectifier member 12 may be formed from metal.

The restricting portion 24 is intended to increase velocity of the air therein in order to retard or eliminate non-uniformity or deflection of the air. The restricting portion 24 may preferably be coaxially and circumferentially disposed in the tubular portion 22. Typically, the restricting portion 24 is formed as a thickened portion of the tubular portion 22. The restricting portion 24 may preferably have an annular tapered upstream end portion 24t. The tapered upstream end portion 24t is shaped such that the inner diameter of the tubular portion 22 is gradually reduced from the upstream toward the downstream. Also, the restricting portion 24 may preferably have an annular tapered downstream end portion 24w. The tapered downstream end portion 24w is shaped such that the inner diameter of the tubular portion 22 is gradually increased from the upstream toward the downstream. In addition, the restricting portion 24 may preferably be formed with a radial bore 24h that corresponds to the opening of the attachment portion 21 formed in the tubular portion 22.

The upstream tapered end portion 24t of the restricting portion 24 may preferably have a cone angle or taper angle $\theta$ of approximately 30 degrees (i.e., 20-40 degrees). Also, the restricting portion 24 may preferably have a restriction rate R relative to the tubular portion 22 (i.e., a diameter reduction rate to the tubular portion 22) of 0.85 or less. The values of the restriction rate R of the restricting portion 24 can be determined by the following equation:

$$R = D2 \div D1$$

wherein D1 corresponds to an inner diameter of the tubular portion 22, and D2 corresponds to an inner diameter of the restricting portion 24. Therefore, the following relation holds:

$$D2 \leqq 0.85 \times D1.$$

Further, the downstream tapered end portion 24w of the restricting portion 24 can be modified. That is, as shown by a broken line in FIG. 1(A), the restricting portion 24 may have an annular non-tapered (or steep) downstream end portion 24d, if necessary.

The flow meter 30 is a conventional thermal type flow meter that is constructed to measure the air flow rate based upon quantities of heat that are removed from an exothermic body by the air. The flow meter 30 may preferably be constituted of a controller 31 and a detector 32. As shown in FIG. 1(A), the flow meter 30 may preferably be attached to the duct body 20 by inserting the detector 32 into the radial bore 24h of the restricting portion 24 and then seating the controller 31 on the flow meter attachment portion 21 of the tubular portion 22 of the duct body 20. As will be recognized, the detector 32 may preferably be positioned such that a detecting portion or air inlet (not shown) of the detector 32 is located on a radially central portion of the restricting portion 24. That is, the detector 32 is positioned so as to measure a flow rate of air that flows in the restricting portion 24 (i.e., a flow rate of air that is choked or restricted by means of the restricting portion 24). Further, the detector 32 is positioned at a distance L from the rectifier member 12. Therefore, the detector 32 is not affected by swirls produced at a proximity of a downstream end of the rectifier member 12. Typically, the values of the distance L are set to values [0.7 × D1] or more. In other words, the values of the distance L is set such that the following relation holds:

$$0.7 \leqq L \div D1.$$

As will be recognized, signals representative of the flow rate of the air that is detected by the detector 32 are transmitted to the controller 31 and processed therein. Thereafter, the processed signals are inputted into an air-fuel ratio control device (not shown) of the internal combustion engine.

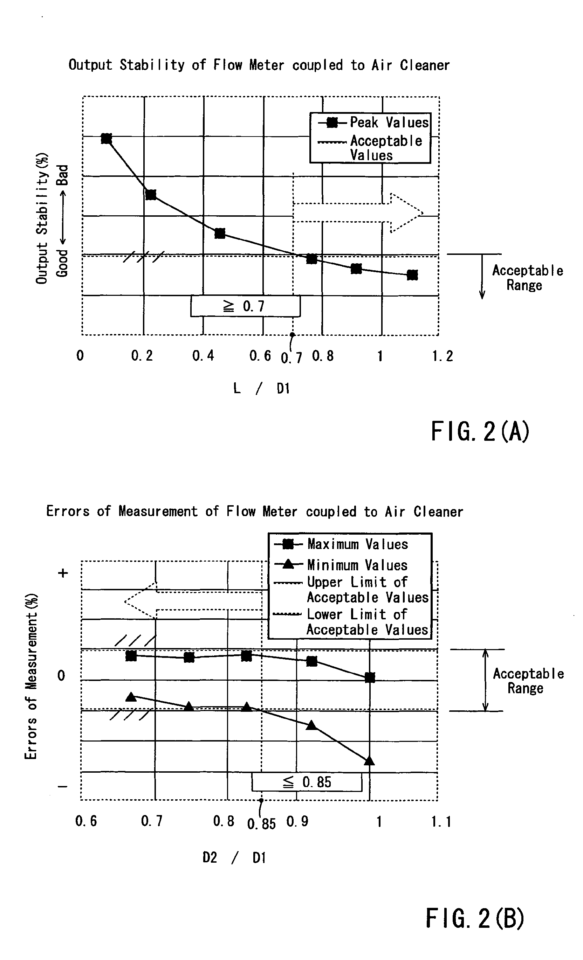

As shown in FIG. 2(A) which illustrates a graph of output stability of the flow meter 30 versus the values [L ÷ D1 (L/D1)], the output stability of the flow meter 30 may progressively decrease or deteriorate as the values [L ÷ D1 (L/D1)] decreases. In other words, the output stability of the flow meter 30 may progressively decrease as the distance L is shortened. This is attributed to the fact that when the distance L is short, the flow meter 30 (the detector 32) can be more significantly affected by the swirls produced at the proximity of the downstream end of the rectifier member 12. Therefore, it is desirable to make the distance L as great as possible in order to increase the output stability of the flow meter 30. However, it is necessary to lengthen the duct body 20 (the tubular portion 22) in order to increase the distance L. Such a lengthened duct body 20 may have negative effects on downsizing of the induction system of the internal combustion engine. Therefore, in the induction duct device 10 of this embodiment, as described above, the values of the distance L is set such that the values [L ÷ D1 (L/D1)] is 0.7 or more. As will be appreciated, the value of 0.7 corresponds to a minimum acceptable value of the output stability of the flow meter 30.

As shown in FIG. 2(B) which illustrates a graph of errors of measurement of the flow meter 30 versus the values [D2 ÷ D 1 (D2/D1)], the errors of measurement of the flow meter 30 may remarkably increase when the values [D2 ÷ D1 (D2/D1)] exceed 0.85. In other words, the measurement error of the flow meter 30 may remarkably increase when the restriction rate R in the restricting portion 24 is large (i.e., closer to 1). This is attributed to the fact that when the restriction rate R in the restricting portion 24 is insufficient, the air is not sufficiently accelerated within the restricting portion 24 and as a result, the deflection of the air cannot be effectively eliminated. Therefore, it is desirable to make the restriction rate R as great as possible (i.e., to make the values of D2 as small as possible) in order to minimize the measurement error of the flow meter 30. However, excessive increasing of the restriction rate R may lead to negative effects, i.e., increasing of pressure loss of the air. Therefore, in the induction duct device 10 of this embodiment, as noted above, the restriction rate R is set to 0.85 or less. As will be appreciated, the value of 0.85 is a critical value that permits (maximum and minimum) errors of measurement to fall within an acceptable range. In other words, the value of 0.85 is a critical value that can effectively eliminate the deflection of the air.

Further, in an examination for obtaining the graph shown in FIG. 2(B), the air is passed through the duct body 20 in an expected minimum flow rate. As will be easily understood, such a flow rate corresponds to a flow rate at the time that the filter element of the air cleaner is substantially completely clogged (i.e., at the time that a service life of the filter element is completed).

According to the induction duct device 10 of the present embodiment, because the rectifier member 12 is disposed in the tubular member 22 of the duct body 20, turbulence of the air that passes through the air cleaner can be eliminated by means of the rectifier member 12. Therefore, velocity of the air can be effectively stabilized.

Further, the rectifier member 12 may typically produce the uniform swirls of air at the proximity of the downstream end thereof. However, the detector 32 of the flow meter 30 does not suffer from such swirls of air because the detector 32 is positioned at a distance L (L ≧ 0.7 × D1) from the rectifier member 12.

In addition, the velocity of the air can be effectively increased in the restricting portion 24 because the restriction rate R (D2/D1) in the restricting portion 24 is set to 0.85 or less. Therefore, the air can be sufficiently accelerated within the restricting portion 24 so that the deflection of the air can be effectively eliminated.

Also, because the tapered upstream end portion 24t of the restricting portion 24 has a cone angle of approximately 30 degrees, the air is not disturbed in the restricting portion 24.

Therefore, measurement accuracy of the flow meter 30 can be effectively increased. As a result, it is possible to accurately and reliably control an air-fuel ratio of the internal combustion engine, thereby reducing pollutants such as nitrogen oxides ($NO_x$) present in engine exhaust gases.

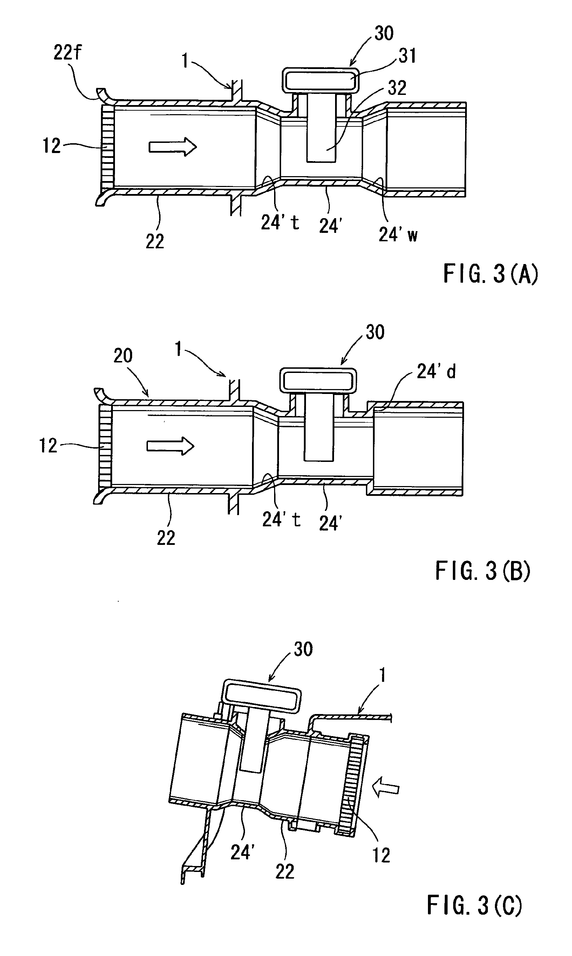

The induction duct device 10 of the representative embodiment can be modified as described herein. For example, the restricting portion 24 can be substituted for a modified restricting portion 24', which is shown in FIGS. 3(A) to 3(C). As will be apparent, the modified restricting portion 24' is integrally formed as a squeezed or reduced circumference portion of the tubular portion 22 and not as the thickened portion of the tubular portion 22. Naturally, in such a modified case, similar to the representative embodiment, the modified restricting portion 24' may respectively have a tapered upstream end portion 24't and a tapered downstream end portion 24'w. Further, as shown in FIG. 3(B), the modified restricting portion 24' may have a non-tapered downstream end portion 24'd instead of the tapered downstream end portion 24'w.

Further, in the induction duct device 10 of the representative embodiment, the duct body 20 is integrally formed with the housing 1 of the air cleaner. However, the present invention is not limited to this type of structure. That is, the duct body 20 and the housing 1 can be separately formed and then be integrated with each other.

In the representative embodiment, a conventional thermal type flow meter is used as the flow meter 30. However, it is possible to use different types of flow meters (e.g., a Karman vortex type flow meter) as the flow meter 30.

Moreover, in the rectifier member 12 of the representative embodiment, the air passages T are formed in the grid member 12k having the uniform grid arrangement. However, the present invention is not limited to this type of structure. That is, although not shown, the air passages T can be formed in a desired thickness of a disk member by forming a plurality of uniformly spaced through holes having a desired diameter. In this case, the length of the air passages T may preferably be three times or more than a diameter of the through holes.

**Claims**

1. An induction duct device (10) used in an induction system of an internal combustion engine, comprising:

   a duct body (20) having a straight tubular portion (22) and a restricting portion (24, 24'), the restricting portion (24, 24') being coaxially disposed in the tubular portion (22) and having a desired restriction rate (R) relative to the tubular portion (22);
   a rectifier member (12) attached to the tubular portion (22) so as to rectify air that is introduced into the duct body (20); and
   a flow meter (30) attached to the duct body (20) for measuring a flow rate of air that passes through the duct body (20);

   wherein the restriction rate (R) of the restricting portion (24, 24') is set to a value that can eliminate deflection of the air, and wherein the flow meter (30) is positioned at a desired distance (L) from the rectifier member (12) so as to measure the flow rate of the air in the restricting portion (24, 24') without being affected by swirls produced at a proximity of a downstream end of the rectifier member (12).

2. An induction duct device as defined in claim 1, wherein values of the desired distance (L) are set to values [0.7 × an inner diameter of the tubular portion] or more.

3. An induction duct device as defined in claim 1 or 2, wherein values of an inner diameter (D2) of the restricting portion (24, 24') are set to values [0.85 × an inner diameter of the tubular portion] or less.

4. An induction duct device as defined in any of claims 1 to 3, wherein the restricting portion (24, 24') has a tapered upstream end portion (24t, 24't) having a cone angle of 20-40 degrees.

5. An induction duct device as defined in any of claims 1 to 4, wherein the restricting portion (24, 24') is formed as a thickened portion (24) of the tubular portion (22).

6. An induction duct device as defined in any of claims 1 to 5, wherein the restricting portion (24, 24') is formed as a reduced circumference portion (24') of the tubular portion (22).

FIG. 1 (A)

FIG. 1 (B)

EP 1 530 029 A1

Output Stability of Flow Meter coupled to Air Cleaner

FIG. 2 (A)

Errors of Measurement of Flow Meter coupled to Air Cleaner

FIG. 2 (B)

8

FIG. 3 (A)

FIG. 3 (B)

FIG. 3 (C)

FIG. 4

**European Patent Office**

**EUROPEAN SEARCH REPORT**

Application Number

EP 04 25 6818

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 240 775 B1 (URAMACHI HIROYUKI ET AL) 5 June 2001 (2001-06-05) * column 7, line 13 - column 20, line 42; figures 1-35 * | 1,5 | G01F1/684 G01F1/32 |
| X | DE 39 04 224 A1 (FISCHER & PORTER GMBH, 3400 GOETTINGEN, DE; FISCHER & PORTER GMBH, 370) 23 November 1989 (1989-11-23) * column 1, line 46 - line 56; figure 1 * | 1,6 | |
| X | EP 0 465 182 A (YAMATAKE-HONEYWELL COMPANY LIMITED) 8 January 1992 (1992-01-08) * column 7, line 9 - column 8, line 24; figure 4 * | 1,5 | |
| X | EP 0 373 929 A (YAMATAKE-HONEYWELL CO.LTD) 20 June 1990 (1990-06-20) * column 2, line 13 - column 3, line 17; figures 2,3 * | 1,5 | |
| X | PATENT ABSTRACTS OF JAPAN vol. 015, no. 019 (P-1153), 16 January 1991 (1991-01-16) & JP 02 263117 A (YAMATAKE HONEYWELL CO LTD), 25 October 1990 (1990-10-25) * abstract * | 1,5 | TECHNICAL FIELDS SEARCHED (Int.Cl.7) G01F |
| X | US 4 010 645 A (HERZL ET AL) 8 March 1977 (1977-03-08) * column 3, line 19 - line 58; figure 1 * | 1,5 | |
| X | US 2002/100474 A1 (KELLNER BERND ET AL) 1 August 2002 (2002-08-01) *page 2, left colomn; figure 2* | 1,6 | |

The present search report has been drawn up for all claims

| Place of search | Date of completion of the search | Examiner |
|---|---|---|
| The Hague | 10 March 2005 | Heinsius, R |

EPO FORM 1503 03.82 (P04C01)

**ANNEX TO THE EUROPEAN SEARCH REPORT
ON EUROPEAN PATENT APPLICATION NO.**

EP 04 25 6818

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2005

| Patent document cited in search report | | Publication date | Patent family member(s) | | Publication date |
|---|---|---|---|---|---|
| US 6240775 | B1 | 05-06-2001 | JP | 3385307 B2 | 10-03-2003 |
| | | | JP | 11325997 A | 26-11-1999 |
| | | | DE | 19852015 A1 | 02-12-1999 |
| DE 3904224 | A1 | 23-11-1989 | NONE | | |
| EP 0465182 | A | 08-01-1992 | JP | 2787785 B2 | 20-08-1998 |
| | | | JP | 4064020 A | 28-02-1992 |
| | | | EP | 0465182 A2 | 08-01-1992 |
| | | | US | 5230245 A | 27-07-1993 |
| EP 0373929 | A | 20-06-1990 | JP | 1947500 C | 10-07-1995 |
| | | | JP | 2161313 A | 21-06-1990 |
| | | | JP | 6082062 B | 19-10-1994 |
| | | | DE | 3940930 A1 | 21-06-1990 |
| | | | EP | 0373929 A1 | 20-06-1990 |
| | | | US | 5020373 A | 04-06-1991 |
| JP 02263117 | A | 25-10-1990 | JP | 6043907 B | 08-06-1994 |
| | | | AT | 142329 T | 15-09-1996 |
| | | | DE | 3940931 A1 | 21-06-1990 |
| | | | DE | 68927091 D1 | 10-10-1996 |
| | | | DE | 68927091 T2 | 13-02-1997 |
| | | | EP | 0373930 A2 | 20-06-1990 |
| | | | ES | 2090044 T3 | 16-10-1996 |
| | | | US | 5014552 A | 14-05-1991 |
| US 4010645 | A | 08-03-1977 | US | 4048854 A | 20-09-1977 |
| US 2002100474 | A1 | 01-08-2002 | DE | 10104462 A1 | 29-08-2002 |
| | | | FR | 2820023 A1 | 02-08-2002 |

EPO FORM P0459

For more details about this annex : see Official Journal of the European Patent Office, No. 12/82